Europäisches Patentamt

European Patent Office

Office européen des brevets

Veröffentlichungsnummer: **0 286 952**
**A2**

## EUROPÄISCHE PATENTANMELDUNG

Anmeldenummer: 88105428.2

Int. Cl.⁴ **B60J 7/11**

Anmeldetag: 06.04.88

Priorität: 11.04.87 DE 3712358

Veröffentlichungstag der Anmeldung:
19.10.88 Patentblatt 88/42

Benannte Vertragsstaaten:
CH DE ES FR IT LI NL

Anmelder: **Gebr. Happich GmbH**
**Postfach 10 02 49 Clausenbrücke 1**
**D-5600 Wuppertal 1(DE)**

Erfinder: **Küpper, Manfred**
**Bernd Rosemeyerstrasse 22**
**D-5608 Radevormwald(DE)**

Sonnendach für Fahrzeuge.

Es wird ein Sonnendach für Fahrzeuge mit einem am Rand einer am Fahrzeugdach vorgesehenen Öffnung abgestützten Rahmen, der aus jeweils einem einstückig ausgebildeten Außenrahmen (2) und Innenrahmen (3) sowie aus einem an dieser Rahmeneinheit fahrzeuginnenseitig angeordneten Abdeckrahmen (4) besteht, welcher mit einem umlaufenden Halterungssteg (12) ausgebildet ist, der in einer Nut (9) der Rahmeneinheit gehalten ist beschrieben, bei dem vorgesehen ist, daß der Abdeckrahmen (4) mindestens einen zweiten, parallel zum ersteren verlaufenden Halterungssteg (13) aufweist, der in eine zweite Nut (10) der Rahmeneinheit eingreift, mit einem umlaufenden, eine Nuthinterschneidung (11) hintergreifenden Vorsprung (14) ausgebildet und in der Nut (10) zusätzlich durch eine am Abdeckrahmen (4) angeordnete und ebenfalls in die Nut (10) eingreifende umlaufende Klemmlippe (16) gehaltert ist.

Fig. 1

### Sonnendach für Fahrzeuge

Die Erfindung bezieht sich auf ein Sonnendach für Fahrzeuge mit einem am Rand einer im Fahrzeugdach vorgesehenen Öffnung abgestützten Rahmen, der aus jeweils einem einstückig ausgebildeten Außenrahmen und Innenrahmen sowie aus einem an dieser Rahmeneinheit fahrzeuginnenseitig angeordneten Abdeckrahmen besteht, welcher mit einem umlaufenden Halterungssteg ausgebildet ist, der in einer Nut der Rahmeneinheit gehalten ist.

In der DE-OS 30 00 280 ist ein Sonnendach für Fahrzeuge mit einem am Rand einer im Fahrzeugdach vorgesehenen Öffnung abgestützten Rahmen gezeigt. Der Rahmen besteht aus einer Rahmeneinheit, welche sich zusammengesetzt aus einem Außenrahmen und einem dagegen mittels Schrauben verspannten Innenrahmen. Bei dieser bekannten Rahmeneinheit besteht aus Kostengründen praktisch keine Möglichkeit zur Anpassung an die jeweilige Dachhimmelfarbe, was aber ebenso wünschenswert ist, wie die Abdeckung der die Rahmen der Rahmeneinheit miteinander verbindenden Schrauben. Aus diesem Grunde ist bereits ein Abdeckrahmen vorgeschlagen worden, welcher mit einem umlaufenden Halterungssteg ausgebildet und damit in einer Nut der Rahmeneinheit gehalten ist. Dabei haben sich aber Schwierigkeiten in bezug auf eine zuverlässige Festlegung des Abdeckrahmens ergeben.

Der Erfindung liegt nun ausgehend von einem Sonnendach der eingangs genannten Art die Aufgabe zugrunde die Rahmeneinheit und den Abdeckrahmen so zu gestalten, daß nicht nur ein dekorativer Abschluß der Rahmeneinheit sondern auch eine unbedingt zuverlässige Festlegung des Abdeckrahmens an der Rahmeneinheit selbst dann gewährleistet ist, wenn der Abdeckrahmen zur Abstützung eines vorgefertigten Dachhimmels herangezogen wird.

Gelöst wird diese Aufgabe durch die Merkmale des Hauptanspruchs. Weitere vorteilhafte Ausgestaltungen der Erfindung ergeben sich aus den Merkmalen der nachfolgenden Ansprüche.

Der erfindungsgemäße Abdeckrahmen bildet einen dekorativen Abschluß, kann aufgrund seiner relativ geringen Masse vergleichsweise kostengünstig auf die jeweilige Farbe des Dachhimmels durch eine entsprechende Einfärbung abgestimmt werden und ist unbedingt zuverlässig an der Rahmeneinheit auch dann festlegbar, wenn relativ große Fertigungstoleranzen gegeben sind un wenn er, was bevorzugt vorgesehen ist, zur Abstützung eines vorgefertigten Dachhimmels herangezogen wird.

Weitere Vorteile und Einzelheiten der Erfindung ergeben sich aus der nachstehenden, anhand das in der Zeichnung dargestellten Ausführungsbeispiels gegebenen Beschreibung. Es zeigen

Fig. 1 den randseitigen Querschnitt eines Sonnendachs mit montiertem Abdeckrahmen und

Fig. 2 den Querschnitt des Abdeckrahmens im Anlieferungszustand.

Von einem Kraftfahrzeug ist nur ein Ausschnitt eines Dachs 1 mit einem in einer Öffnung desselben eingesetzten Sonnendach gezeigt. Das Sonnendach weist einen an Rand der im Fahrzeugdach vorgesehenen Öffnung abgestützten Rahmen auf, der aus jeweils einem einstückig ausgebildeten Außenrahmen 2 und Innenrahmen 3 sowie aus einem an dieser Rahmeneinheit fahrzeuginnenseitig angeordneten Abdeckrahmen 4 besteht. Der Außenrahmen 2 und der Innenrahmen 3 sind unter Einschluß des Dachs 1 mittels Schrauben 5 aneinanderfestgelegt. Zumindest ein Dichtungsprofil 6 ist zwischen dem Außenrahmen 2 und dem Dach 1 angeordnet, während ein zweites Dichtungsprofil 7 in einer Rinne des Außenrahmens 2 sitzt und die Abdichtung gegenüber der Scheibe 8 des Sonnendachs bildet. Der Innenrahmen 3 weist eine nach unten, ins Fahrzeuginnere hin offene umlaufende Nut 9 auf. Ebenso eine nach unten, ins Fahrzeuginnere hin offene umlaufende Nut 10 ist im Außenrahmen 2 vorgesehen. Der Öffnungsquerschnitt des Außenrahmens 2 ist dabei kleiner als der des Innenrahmens 3. Die Nut 10 weist eine Nuthinterschneidung 11 auf, die im Teilungsbereich zwischen dem Außenrahmen 2 und dem Innenrahmen 3 vorgesehen ist.

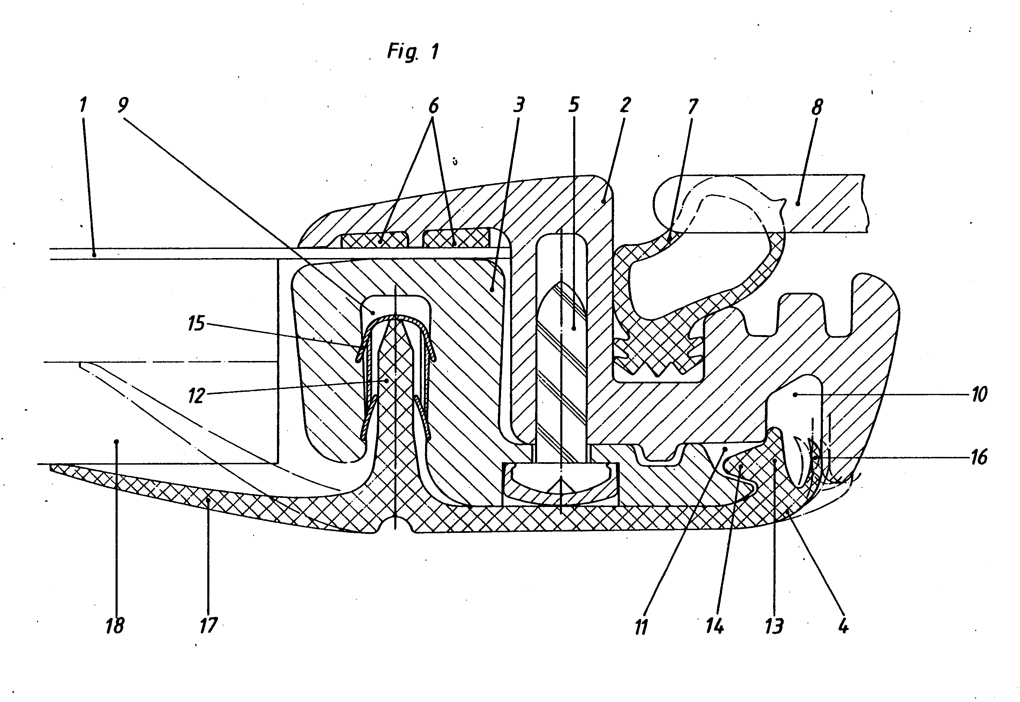

Der Abdeckrahmen 4 weist einen ersten umlaufenden Halterungssteg 12 und einen zweiten umlaufenden Halterungssteg 13 auf, der im Abstand parallel zum ersten verläuft und mit einem Vorsprung 14 ausgebildet ist. Der erste Halterungssteg 12 greift in die Nut 9 und der zweite Halterungssteg 13 in die Nut 10 ein. Während der erste Halterungssteg 12 in der Nut 9 durch federklammern 15 abzugssicher festgelegt ist, ist der zweite Halterungssteg 13 in der Nut 10 dadurch abzugssicher gehalten, daß der Vorsprung 14 desselben die Nuthinterschneidung 11 hintergreift. Dieses Hintergreifen kann u.U., insbesondere bei großen Fertigungstoleranzen, nicht allein ausreichen, um einer absoluten Abzugssicherheit zu genügen. Aus diesem Grunde ist der Abdeckahmen 4 mit einer umlaufenden Klemmlippe 16 ausgebildet, die ebenfalls in die Nut 10 eingreift und damit den zweiten Halterungssteg 13 zusätzlich sichert bzw. haltert. Die umlaufende Klemmlippe 16 ist als die Rahmenöffnung des Abdeckrahmens 4 begrenzende Randkante ausgebildet, weist eine zur Rahmeneinheit 2, 3 hin gleichmäßig gekrümmte Gestaltungsform auf und ist biegeelastisch. Durch die Klemmlippe 16 wird der zweite Halterungssteg 13 stets in Richtung zur Nuthinterschneidung 11 belastet, woraus folgt, daß der am zweiten Halterungssteg 13 vorgesehene Vorsprung 14 an der der Klemmlippe 16 abgewandten Seite desselben angeordnet ist. Die in Fig. 1 gezeigte Einbausituation zeigt zeichnungsrechtsseitig, welche Fertigungstoleranzen auftreten und durch die Klemmlippe 16 überbrückt werden können.

Der Abdeckrahmen 4 ist an seiner der Rahmenöffnung bzw. Klemmlippe 16 abgewandten Außenseite mit einer umlaufenden Haltelippe 17 zum Untergreifen eines Dachhimmels 18 ausgebildet, wobei der Dachhimmel, wie in Fig. 1 strichpunktiert angedeutet, unterschiedlich dick sein kann und von der Haltelippe 17 dennoch unterfangen wird. Die umlaufende Haltelippe 17 weist eine eine Verspannung bewirkende zur Rahmeneinheit hin gleichmäßig gekrümmte Gestaltungsform auf und ist biegeelastisch ausgebildet.

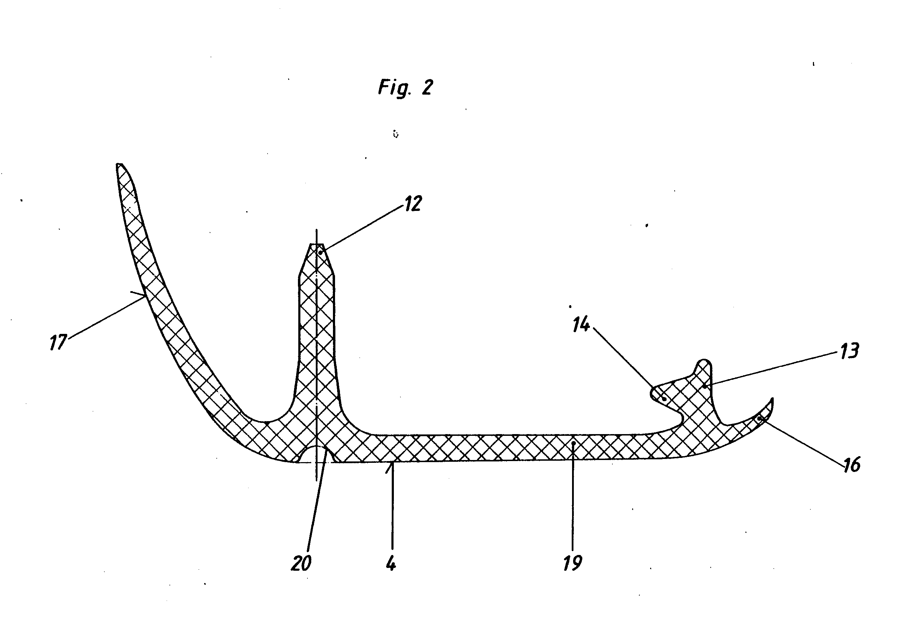

Wie insbesondere aus Fig. 2 hervorgeht, weist der Abdeckrahmen 4 im Querschnitt gesehen einen geradlinig verlaufenden Abschnitt 19 auf, der einseitig (zeichnungslinksseitig) in die gekrümmte Haltelippe 17 und anderseitig (zeichnungsrechtsseitig) in die gekrümmte Klemmlippe 16 übergeht, wobei jeweils im Übergangsbereich zwischen dem geradlinig verlaufenden Abschnitt und den Lippen rückseitig die Halterungsstege 12 und 13 angeordnet sind. Im Übergangsbereich zur Haltelippe 17 ist außenseitig noch eine gestaltauflockernde, dekorativ und auch scharnierend wirkende Rinne 20 vorgesehen.

Sowohl der Außenrahmen 2 als auch der Innenrahmen 3 sind zweckmäßigerweise als ggf. verstärke Kunststoff-Spritzgußteile ausgebildet. Der Abdeckrahmen 4 ist bevorzugterweise als einstückiges, materialeinheitliches Kunststoff-Spritzgußteil ausgebildet. Der Abdeckrahmen 4 besteht beispielsweise aus PVC-Elastomer und weist eine bevorzugte Härte von etwa 90 Shore A auf.

**Ansprüche**

1. Sonnendach für Fahrzeuge mit einem am Rand einer am Fahrzeugdach vorgesehenen Öffnung abgestützten Rahmen, der aus jeweils einem einstückig ausgebildeten Außenrahmen (2) und Innenrahmen (3) sowie aus einem an dieser Rahmeneinheit fahrzeuginnenseitig angeordneten Abdeckrahmen (4) besteht, welcher mit einem umlaufenden Halterungssteg (12) ausgebildet ist, der in einer Nut (9) der Rahmeneinheit gehalten ist, dadurch gekennzeichnet, daß der Abdeckrahmen (4) mindestens einen zweiten, parallel zum ersteren verlaufenden Halterungssteg (13) aufweist, der in eine zweite Nut (10) der Rahmeneinheit eingreift, mit einem umlaufenden, eine Nuthinterschneidung (11) hintergreifenden Vorsprung (14) ausgebildet und in der Nut (10) zusätzlich durch eine am Abdeckrahmen (4) angeordnete und ebenfalls in die Nut (10) eingreifende umlaufende Klemmlippe (16) gehaltert ist.

2. Sonnendach nach Anspruch 1, dadurch gekennzeichnet, daß die Klemmlippe (16) als die Rahmenöffnung des Abdeckrahmens (4) begrenzende Randkante ausgebildet ist.

3. Sonnendach nach Anspruch 1 oder 2, dadurch gekennzeichnet, daß die Klemmlippe (16) eine zur Rahmeneinheit hin gleichmäßig gekrümmte Gestaltungsform aufweist.

4. Sonnendach nach einem oder mehreren der Ansprüche 1 bis 3, dadurch gekennzeichnet, daß die Klemmlippe (16) biegeelastisch ausgebildet ist.

5. Sonnendach nach einem oder mehreren der Ansprüche 1 bis 4, dadurch gekennzeichnet, daß der am zweiten Halterungssteg (13) vorgesehene Vorsprung (14) an der der Klemmlippe (16) abgewandten Seiten desselben angeordnet ist.

6. Sonnendach nach einem oder mehreren der Ansprüche 1 bis 5, dadurch gekennzeichnet, daß die in der Rahmeneinheit vorgesehene Nuthinterschneidung (11) im Teilungsbereich zwischen dem Außenrahmen (2) und dem Innenrahmen (3) ausgebildet ist.

7. Sonnendach nach einem oder mehreren der Ansprüche 1 bis 6, dadurch gekennzeichnet, daß die den zweiten Halterungssteg (13) mit Ausnahme des Vorsprungs (14) und die Klemmlippe (16) aufnehmende Nut (10) im Außenrahmen (2) angeordnet ist.

8. Sonnendach nach einem oder mehreren der Ansprüche 1 bis 7, dadurch gekennzeichnet, daß der Abdeckrahmen (4) an seiner der Rahmenöffnung abgewandten Außenseite mit einer umlaufenden Haltelippe (17) zum Untergreifen eines Dachhimmels (18) ausgebildet ist.

9. Sonnendach nach einem oder mehreren der Ansprüche 1 bis 8, dadurch gekennzeichnet, daß die Haltelippe (17) eine zur Rahmeneinheit hin gleichmäßig gekrümmte Gestaltungsform aufweist.

10. Sonnendach nach einem oder mehreren der Ansprüche 1 bis 9, dadurch gekennzeichnet, daß die Haltelippe (17) biegeelastisch ausgebildet ist.

11. Sonnendach nach einem oder mehreren der Ansprüche 1 bis 10, dadurch gekennzeichnet, daß der erste Halterungssteg (12) durch Federklammern (15) in der zugehörigen Nut (9) befestigt ist.

12. Sonnendach nach einem oder mehreren der Ansprüche 1 bis 11, dadurch gekennzeichnet, daß der Abdeckrahmen (4) im Querschnitt gesehen einen geradlinig verlaufenden Abschnitt (19) aufweist, der einseitig in die gekrümmte Haltelippe (17) und anderseitig in die gekrümmte Klemmlippe (16) übergeht, wobei jeweils im Übergangsbereich zwischen dem geradlinig verlaufenden Abschnitt (19) und den Lippen (16, 17) rückseitig die Halterungsstege (12, 13) angeordnet sind.

13. Sonnendach nach einem oder mehreren der Ansprüche 1 bis 12, dadurch gekennzeichnet, daß der Abdeckrahmen (4) als einstükkiges, materialeinheitliches Kunststoff-Spritzgußteil ausgebildet ist.

Fig. 1

0 286 952

0 286 952

Fig. 2